# EUROPÄISCHE PATENTSCHRIFT

(11) **EP 2 828 109 B1**
(45) Veröffentlichungstag und Bekanntmachung des Hinweises auf die Patenterteilung: **20.01.2016**
(21) Anmeldenummer: 13714205.5
(22) Anmeldetag: 23.03.2013
(51) Int. Cl.: B60K 15/035, B60K 15/03

(54) **VERFAHREN ZUM BETREIBEN EINER TANKEINRICHTUNG SOWIE ENTSPRECHENDE TANKEINRICHTUNG**
METHOD FOR OPERATING A FUEL DEVICE AND CORRESPONDING FUEL DEVICE
PROCÉDÉ POUR L'OPÉRATION D'UN DISPOSITIF DE CARBURANT ET DISPOSITIF DE CARBURANT ASSOCIÉ

(30) Priorität: 24.03.2012 DE 102012005996
(43) Veröffentlichungstag der Anmeldung: 28.01.2015
(73) Patentinhaber: Audi AG, 85045 Ingolstadt (DE)
(72) Erfinder: HAGEN, Harald, 95473 Creussen (DE)
(74) Vertreter: Patzelt, Heike Anna Maria
(86) Internationale Anmeldenummer: PCT/EP2013/000882
(87) Internationale Veröffentlichungsnummer: WO 2013/143675

(56) Entgegenhaltungen:
- DE-A1-102010 014 558
- DE-A1-102010 019 831
- DE-A1-102011 007 592
- FR-A1- 2 958 272
- US-A- 5 692 480

## Beschreibung

Die Erfindung betrifft ein Verfahren zum Betreiben einer Tankeinrichtung eines Kraftfahrzeugs, wobei die Tankeinrichtung einen Tank sowie eine Tankentlüftungseinrichtung mit wenigstens einem mit einem Erregerstrom beaufschlagbaren Schaltventil aufweist und das Schaltventil nur öffnet, wenn der Erregerstrom eine Erregerstromschwelle über eine bestimmte Zeitspanne hinweg übersteigt. Die Erfindung betrifft weiterhin eine Tankeinrichtung eines Kraftfahrzeugs.

Verfahren der eingangs genannten Art sind aus dem Stand der Technik bekannt. Der Tank der Tankeinrichtung kann beispielsweise ein Kraftstofftank oder ein Hilfsstofftank sein, wobei der Hilfsstoff insbesondere ein Reduktionsmittel ist. In dem Tank liegt üblicherweise stets ein Fluid, also beispielsweise Kraftstoff oder Hilfsstoff, in flüssiger Form und unter Umständen auch in gasförmiger Form vor. Das gasförmige Fluid vermischt sich dabei mit sich in dem Tank befindlicher Luft. Insbesondere bei einem Einfüllen von Fluid in den Tank, aber auch bei Ausdehnung des in dem Tank befindlichen Fluids aufgrund einer Temperaturzunahme, steigt der Druck in dem Tank an. Bei konventionellen Kraftfahrzeugen ist es nun üblich, den Tank über eine Filtereinrichtung zu entlüften. Die Filtereinrichtung weist beispielsweise einen Filter, insbesondere einen Aktivkohlefilter, auf. Dieser wird von Zeit zu Zeit regeneriert, was bedeutet, dass Frischluft über den Filter in Richtung einer sich in Betrieb befindlichen Brennkraftmaschine des Kraftfahrzeugs geführt wird. Mithilfe der Frischluft wird das zuvor in dem Filter aufgefangene Fluid aus diesem ausgetragen, in Richtung der Brennkraftmaschine geführt und nachfolgend in ihr verbrannt.

Diese Vorgehensweise ist bei Kraftfahrzeugen mit Hybridantriebseinrichtungen nicht unmittelbar einsetzbar, weil die Hybridantriebseinrichtung neben der Brennkraftmaschine über ein weiteres Antriebsaggregat verfügt und die Brennkraftmaschine häufig über einen längeren Zeitraum nicht betrieben wird. Während dieses Zeitraums ist ein Spülen des Aktivkohlefilters nicht möglich. Aus diesem Grund kann der Tank als sogenannter Drucktank ausgebildet sein, der einem Innendruck standhält, welcher unter Umständen deutlich größer ist als der Umgebungsdruck in der Umgebung der Tankeinrichtung. Zudem liegt eine Entlüftungsverbindung zwischen dem Tank und der Filtereinrichtung nicht permanent vor, sondern ist mittels einer Ventileinrichtung unterbrechbar. Diese Ventileinrichtung verfügt über das Schaltventil, beispielsweise ein Magnetventil. Dieses ist mit dem Erregerstrom beaufschlagbar, öffnet jedoch nur, wenn der Erregerstrom die Erregerstromschwelle übersteigt. Unter dem Erregerstrom beziehungsweise der Erregerstromschwelle kann dabei eine Stromstärke oder eine Spannung verstanden werden.

Bei einer derartigen Tankeinrichtung kann es insbesondere bei niedrigen Umgebungstemperaturen zu einer Vereisung kommen. Dies ist vor allem dann der Fall, wenn sich zuvor Kondensat in der Ventileinrichtung beziehungsweise dem Schaltventil niedergeschlagen hat. Beispielsweise wird bei einer Belüftung des Tanks durch die Entlüftungsverbindung oder bei einer Regeneration feuchte Luft aus der Umgebung der Tankeinrichtung angesaugt. Die in dieser enthaltene Feuchtigkeit kondensiert in der Ventileinrichtung und gefriert nachfolgend. Entsprechend kann es zu einem Festsetzen der Ventileinrichtung beziehungsweise des Magnetventils kommen, sodass nachfolgend die Entlüftungsverbindung nicht mehr hergestellt werden kann. Entsprechend kann der Tank nicht oder lediglich unzureichend be- und/oder entlüftet werden, sodass es in dem Tank zu einem unzulässig hohen beziehungsweise niedrigen Druck und mithin zu Beschädigungen des Tanks kommt.

Es ist daher Aufgabe der Erfindung, ein Verfahren zum Betreiben einer Tankeinrichtung vorzuschlagen, welches den eingangs genannten Nachteil nicht aufweist, sondern insbesondere ein zuverlässiges Betreiben der Tankeinrichtung in einem weiten Temperaturbereich, speziell auch bei niedrigen Außentemperaturen, ermöglicht.

Dies wird erfindungsgemäß mit einem Verfahren mit den Merkmalen des Anspruchs 1 erreicht. Dabei ist vorgesehen, dass das Schaltventil zum Aufheizen in einer ersten Betriebsart zumindest zeitweise auch dann mit Erregerstrom beaufschlagt wird, der größer ist als die Erregerstromschwelle, wenn ein Entlüften des Tanks von einem Steuergerät der Tankeinrichtung nicht vorgegeben wird. Durch das Beaufschlagen mit dem Erregerstrom erwärmt sich das Schaltventil beziehungsweise die gesamte Ventileinrichtung. Entsprechend kann in dem Schaltventil und/oder der Ventileinrichtung vorliegendes Eis aufgetaut beziehungsweise bereits dessen Entstehung verhindert werden, sodass das das Be- und/oder Entlüften des Tanks ohne Beeinträchtigungen möglich ist. In der ersten Betriebsart wird dabei in Kauf genommen, dass sich das Schaltventil durch das Beaufschlagen mit dem Erregerstrom öffnet, auch wenn dies nicht notwendigerweise der Fall ist. Das Beaufschlagen wird dabei selbst dann durchgeführt, wenn das Steuergerät der Tankeinrichtung ein Entlüften des Tanks nicht vorsieht beziehungsweise nicht vorgibt. Das bedeutet, dass das Steuergerät das Schaltventil nicht zum Belüften beziehungsweise Entlüften ansteuert, beispielsweise weil dies zum momentanen Zeitpunkt nicht notwendig oder nicht erwünscht ist. Dennoch wird das Schaltventil mit dem Erregerstrom beaufschlagt, der zudem größer ist als die Erregerstromschwelle. Dem Öffnen des Schaltventils wirken üblicherweise eine Federkraft und die Trägheitskraft von bewegten Teilen des Schaltventils entgegen. Die Erregerstromschwelle ist üblicherweise unmittelbar abhängig von der Federkraft, während dies für die Trägheitskraft nur in geringem Ausmaß gilt. Das bedeutet insgesamt, dass bei einem der Erregerstromschwelle zumindest entsprechenden Erregerstrom, der über eine ausreichend lange Zeitspanne hinweg an dem Schaltventil anliegt, sich das Schaltventil öffnet, wobei insbesondere die Trägheitskraft den Vorgang des Öffnens verzögert.

Eine Weiterbildung der Erfindung sieht vor, dass die erste Betriebsart durchgeführt wird, wenn eine Umgebungstemperatur kleiner ist als eine Umgebungsschwellentemperatur und/oder eine Tanktemperatur des Tanks, insbesondere eine Fluidtemperatur von in dem Tank befindlichen Fluid, kleiner ist als eine Fluidschwellentemperatur und/oder ein Tankinnendruck kleiner ist als ein Schwellentankinnendruck. Bei Erfüllung der vorstehend genannten Kriterien ist es üblicherweise unkritisch, wenn sich das Schaltventil während des Beaufschlagens mit dem Erregerstrom, der größer ist als die Erregerstromschwelle, zumindest teilweise öffnet, obwohl dies von dem Steuergerät nicht vorgesehen ist. Die Umgebungsschwellentemperatur ist dabei beispielsweise eine Temperatur von höchstens 10°C, höchstens 5°C oder höchstens 0°C. Bei Vorliegen einer Umgebungstemperatur, welche kleiner ist als eine derartige Umgebungsschwellentemperatur, kann üblicherweise davon ausgegangen werden, dass der Anteil des gasförmigen Fluids in dem Tank gering ist.

Entsprechend kann auch bei einem Öffnen des Schaltventils und damit einem Freigeben der Entlüftungsverbindung kein oder lediglich eine geringe Menge des (gasförmigen) Fluids in Richtung der Filtereinrichtung gelangen. Entsprechendes gilt für die Tanktemperatur, welche kleiner ist als die Fluidschwellentemperatur. Letztere kann dabei beispielsweise entsprechend den vorstehend für die Umgebungsschwellentemperatur genannten Werten gewählt sein. Der Schwellentankinnendruck kann beispielsweise gleich einem Umgebungsdruck in der Umgebung der Tankeinrichtung gewählt sein. Ist der Tankinnendruck kleiner als dieser, so kann auch bei einem Öffnen des Schaltventils kein Fluid in Richtung der Filtereinrichtung gelangen. Vielmehr wird eine umgekehrte Strömungsrichtung vorliegen, sodass Luft aus der Umgebung der Tankeinrichtung in den Tank gelangt. Dies ist jedoch stets zulässig.

Eine Weiterbildung der Erfindung sieht vor, dass das Beaufschlagen des Schaltventils mit dem Erregerstrom in der ersten Betriebsart über eine Zeitspanne durchgeführt wird, die derart gewählt ist, dass das Schaltventil geschlossen bleibt. Wie bereits eingangs erwähnt, öffnet sich das Schaltventil auch wenn der Erregerstrom die Erregerstromschwelle übersteigt nur dann, wenn dies über eine bestimmte Zeitspanne hinweg erfolgt. Zuvor wirkt im Falle des Magnetventils der Verlagerung eines Magnetankers des Schaltventils seine Trägheit beziehungsweise eine aus dieser resultierende Trägheitskraft und die auf den Magnetanker wirkende Federkraft entgegen. Die Zeitspanne, innerhalb welcher das Beaufschlagen mit dem Erregerstrom erfolgt, soll nun kleiner sein als diese bestimmte Zeitspanne. Entsprechend bleibt das Schaltventil auch in der ersten Betriebsart vollständig geschlossen, wenn es mit dem Erregerstrom beaufschlagt wird. Vorzugsweise wird für das Beauschlagen mit dem Erregerstrom eine PWM-Steuerung (PWM: Pulse Width Modulation) herangezogen. Alternativ kann es selbstverständlich vorgesehen sein, dass die Zeitspanne derart gewählt wird, dass sich das Schaltventil wenigstens teilweise, insbesondere vollständig, öffnet.

Eine Weiterbildung der Erfindung sieht vor, dass das Schaltventil zum Aufheizen in einer zweiten Betriebsart zumindest zeitweise mit Erregerstrom beaufschlagt wird, der kleiner ist als die Erregerstromschwelle. Im Gegensatz zu der ersten Betriebsart ist also der Erregerstrom stets kleiner als die Erregerstromschwelle. Auch bei einer dauerhaften Beaufschlagung des Schaltventils mit dem Erregerstrom öffnet es sich daher in der zweiten Betriebsart nicht, bleibt also vollständig geschlossen. Das Beaufschlagen des Schaltventils kann dabei mit einem konstanten Erregerstrom vorgesehen sein. Alternativ kann auch hier eine PWM-Steuerung des Schaltventils vorgesehen sein, bei welchem der Erregerstrom periodisch an dem Schaltventil angelegt und wieder abgeschaltet wird.

Eine Weiterbildung der Erfindung sieht vor, dass die zweite Betriebsart durchgeführt wird, wenn die Umgebungstemperatur größer ist als die Umgebungsschwellentemperatur und/oder die Tanktemperatur des Tanks, insbesondere die Fluidtemperatur des in dem Tank befindlichen Fluids, größer ist als die Fluidschwellentemperatur und/oder der Tankinnendruck größer ist als der Schwellentankinnendruck. Zusätzlich kann auch bereits das Erreichen des genannten Schwellenwerts durch den jeweiligen Wert ausreichend sein, sodass die zweite Betriebsart ab dem Erreichen der Umgebungsschwellentemperatur durch die Umgebungstemperatur und/oder dem Erreichen der Fluidschwellentemperatur durch die Tanktemperatur und/oder dem Erreichen des Schwellentankinnendrucks durch den Tankinnendruck die jeweilige Bedingung erfüllt. Ist zumindest eine der genannten Bedingungen erfüllt, so besteht eine gewisse Wahrscheinlichkeit, dass bei einem Öffnen des Schaltventils ungewollt gasförmiges Fluid in Richtung der Filtereinrichtung gelangt. Um dies zu verhindern, wird die zweite Betriebsart durchgeführt, bei welcher der Erregerstrom stets kleiner ist als die Erregerstromschwelle. In der zweiten Betriebsart bleibt demnach das Schaltventil stets geschlossen, wenn das Entlüften des Tanks nicht von dem Steuergerät der Tankeinrichtung vorgegeben wird.

Eine Weiterbildung der Erfindung sieht vor, dass durch das Aufheizen des Schaltventils wenigstens ein mit dem Schaltventil in Wärmeübertragungsverbindung stehendes und zu diesem parallel geschaltetes Druckbegrenzungsventil erwärmt wird. Die Ventileinrichtung verfügt demnach neben dem Schaltventil über das wenigstens eine Druckbegrenzungsventil. Dieses dient je nach Ausrichtung dem Belüften oder Entlüften des Tanks, sobald der Tankinnendruck einen bestimmten Schwellendruck unterschreitet beziehungsweise überschreitet. Das Druckbegrenzungsventil ist strömungstechnisch parallel zu dem Schaltventil vorgesehen. Vorzugsweise sind zwei Druckbegrenzungsventile vorgesehen, von welchen eines öffnet, sobald der Tankinnendruck einen ersten Schwellentankinnendruck überschreitet und ein zweites, sobald der Tankinnendruck einen zweiten Schwellentankinnendruck unterschreitet, wobei der erste Schwellentankinnendruck größer ist als der zweite Schwellentankinnendruck.

Das Druckbegrenzungsventil ist passiv, verfügt also nicht über ein elektrisches Betätigungsmittel. Daher entspricht seine Temperatur üblicherweise der Umgebungstemperatur oder unterschreitet dieses sogar, während es durchströmt wird. Daher ist das Druckbegrenzungsventil weitaus anfälliger für Vereisung als das Schaltventil. Um das Festsetzen des Druckbegrenzungsventils zu verhindern, steht dieses in Wärmeübertragungsverbindung mit dem Schaltventil. Das bedeutet, dass die durch das Beaufschlagen des Schaltventils mit dem Erregerstrom erzeugte Wärme wenigstens teilweise an das Druckbegrenzungsventil weitergeleitet wird. Bevorzugt liegt dabei das Druckbegrenzungsventil zu diesem Zweck in einem gemeinsamen Ventilgehäuse mit dem Schaltventil vor.

Eine Weiterbildung der Erfindung sieht vor, dass das Beaufschlagen des Schaltventils mit Erregerstrom periodisch oder kontinuierlich durchgeführt wird. In ersterem Fall kommt beispielsweise die bereits erwähnte PWM-Steuerung des Schaltventils zum Einsatz, mittels welcher während eines bestimmten Zeitraums der Erregerstrom periodisch angeschaltet und wieder abgeschaltet wird. In letzterem Fall wird der Erregerstrom, mit welchem das Schaltventil beaufschlagt wird, über einen bestimmten Zeitraum konstant gehalten.

Eine Weiterbildung der Erfindung sieht vor, dass der Erregerstrom in Abhängigkeit von einer Sollheizleistung gewählt wird. Die Sollheizleistung kann entweder konstant sein oder variabel in Abhängigkeit von den Umgebungsbedingungen gewählt sein. In letzterem Fall wird beispielsweise die Sollheizleistung in Abhängigkeit von der Umgebungstemperatur festgelegt. Dabei ist die Sollheizleistung umso größer, je niedriger die Umgebungstemperatur ist. Aus der Sollheizleistung wird nun der Erregerstrom bestimmt, welcher notwendig ist, um einen zuverlässigen Betrieb der Tankeinrichtung und insbesondere der Ventileinrichtung beziehungsweise des Schaltventils zu gewährleisten. Nachfolgend wird der Erregerstrom an dem Schaltventil eingestellt. Das Bestimmen der Sollheizleistung beziehungsweise des Erregerstroms kann einmalig zu Beginn des Betriebs der Tankeinrichtung oder periodisch in bestimmten Zeitabständen erfolgen.

Die Erfindung betrifft weiterhin eine Tankeinrichtung eines Kraftfahrzeugs, insbesondere zur Durchführung des Verfahrens gemäß den vorstehenden Ausführungen, wobei die Tankeinrichtung einen Tank sowie eine Tankentlüftungseinrichtung mit wenigstens einem mit einem Erregerstrom beaufschlagbaren Schaltventil aufweist und das Schaltventil nur öffnet, wenn der Erregerstrom über eine bestimmte Zeitspanne hinweg eine Erregerstromschwelle übersteigt. Dabei ist vorgesehen, dass ein Steuergerät der Tankeinrichtung dazu ausgebildet ist, das Schaltventil zum Aufheizen in einer ersten Betriebsart zumindest zeitweise auch dann mit Erregerstrom zu beaufschlagen, der größer ist als die Erregerstromschwelle, wenn ein Entlüften des Tanks von dem Steuergerät nicht vorgegeben ist. Auf die Vorteile einer solchen Vorgehensweise wurde bereits hingewiesen. Das verwendete Verfahren kann gemäß den vorstehenden Ausführungen weitergebildet sein.

Die Erfindung wird nachfolgend anhand der in der Zeichnung dargestellten Ausführungsbeispiele näher erläutert, ohne dass eine Beschränkung der Erfindung erfolgt. Dabei zeigt
- Figur 1: eine schematische Darstellung einer Tankeinrichtung eines Kraftfahrzeugs, wobei die Tankeinrichtung eine Ventileinrichtung mit wenigstens einem Schaltventil aufweist,
- Figur 2: ein Diagramm, in welchem ein Erregerstrom des Schaltventils über der Zeit aufgetragen ist, und
- Figur 3: ein Ablaufdiagramm, in welchem ein Verfahren zum Betreiben der Tankeinrichtung dargestellt ist.

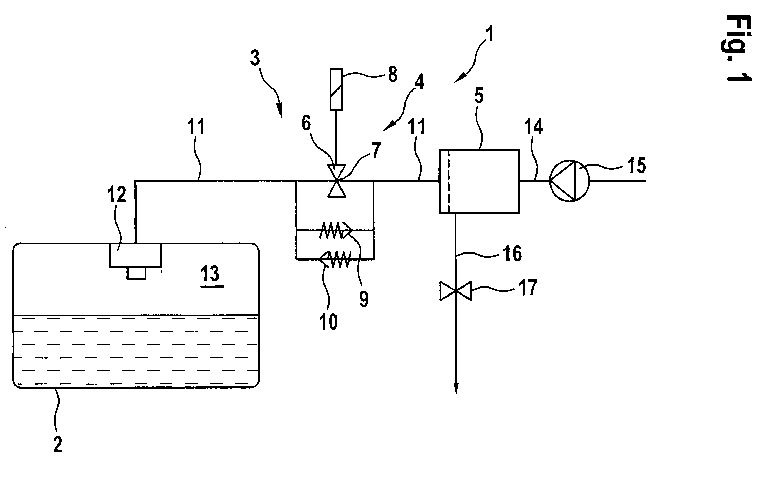

Die Figur 1 zeigt eine schematische Darstellung einer Tankeinrichtung 1 eines Kraftfahrzeugs. Diese weist einen Tank 2 sowie eine Tankentlüftungseinrichtung 3 auf. Der Tankentlüftungseinrichtung 3 ist insbesondere eine Ventileinrichtung 4 und eine Filtereinrichtung 5 zugeordnet. Die Ventileinrichtung 4 besteht aus einem Schaltventil 6 mit einem Querschnittsverstellglied 7 und einem mit diesem verbundenen Aktuator 8, also beispielsweise einem Magnetanker mit einer zugeordneten Spule. In letzterem Fall liegt das Schaltventil 6 als Magnetventil vor. Die Ventileinrichtung 4 weist zudem zwei entgegengerichtete Druckbegrenzungsventile 9 und 10 auf. Diese sind zueinander und zusätzlich zu dem Schaltventil 6 parallel geschaltet. Die Filtereinrichtung 5 liegt in einer Entlüftungsverbindung 11, dargestellt beispielsweise durch eine Entlüftungsverbindungsleitung, vor, welche auf ihrer einen Seite an den Tank 2 und auf ihrer anderen Seite an die Filtereinrichtung 5 angeschlossen ist. Auf der dem Tank 2 zugewandten Seite der Entlüftungsverbindung 11 kann zudem eine Auslaufsicherung 12 in Form eines Roll-Over-Ventils (ROV) vorgesehen sein. Die Auslaufsicherung 12 ist dabei zwischen einem Tankinnenraum 13 und der Entlüftungsverbindung 11 vorgesehen. An die Filtereinrichtung 5 ist neben der Entlüftungsverbindung 11 eine Spülluftverbindung 14 mit einer Fördereinrichtung 15 sowie eine Verbindung 16 zu einer Brennkraftmaschine des Kraftfahrzeugs angeschlossen. In der Verbindung 16 liegt ein Schaltventil 17 vor.

Insbesondere bei geringen Umgebungstemperaturen kann der Druck in dem Tankinnenraum 13 stark absinken. Sinkt der Tankinnendruck unter einen Schwellentankinnendruck, so öffnet bei geschlossenem Schaltventil 6 das Druckbegrenzungsventil 9. Entsprechend kann Luft aus der Umgebung der Tankeinrichtung durch die Spülluftverbindung 14 in die Filtereinrichtung und von dort durch die Entlüftungsverbindung 11 in den Tank 2 beziehungsweise den Tankinnenraum 13 gelangen. Zusammen mit der Luft kann Feuchtigkeit in die Ventileinrichtung 4 und insbesondere das Druckbegrenzungsventil 9 gelangen, welche sich insbesondere als Kondensat in diesem absetzt. Gefriert nachfolgend die (kondensierte) Feuchtigkeit, so kann es zu einem Blockieren des Druckbegrenzungsventils 9, aber auch des Druckbegrenzungsventils 10 oder des Schaltventils 6 kommen. Letzteres ist zum Öffnen mit einem Erregerstrom beaufschlagbar. Das Schaltventil 6 öffnet jedoch nur, wenn der Erregerstrom über eine bestimmte Zeitspanne hinweg eine Erregerstromschwelle übersteigt.

In einer ersten Betriebsart ist es nun vorgesehen, dass das Schaltventil 6 zum Aufheizen zumindest zeitweise auch dann mit Erregerstrom beaufschlagt wird, der größer ist als die Erregerstromschwelle, wenn ein Entlüften des Tanks von einem hier nicht dargestellten Steuergerät der Tankeinrichtung 1 nicht vorgegeben wird. Das bedeutet also, dass in der ersten Betriebsart ein Freigeben der Entlüftungsverbindung 11 auch dann in Kauf genommen wird, wenn kein Entlüften des Tanks 2 erfolgen soll. Besonders bevorzugt wird die erste Betriebsart daher nur dann durchgeführt, wenn eine Umgebungstemperatur kleiner ist als eine Umgebungsschwellentemperatur, eine Tanktemperatur des Tanks kleiner ist als eine Fluidschwellentemperatur und/oder ein Tankinnendruck kleiner ist als ein Schwellentankinnendruck. In diesen Fällen tritt üblicherweise auch bei geöffnetem Schaltventil 6 keine Durchströmung der Entlüftungsverbindung 11 von dem Tank 2 in Richtung der Filtereinrichtung 5 auf. Vielmehr ist der Tankinnendruck in dem Tank 2 bei Zutreffen der genannten Bedingungen üblicherweise derart gering, dass die Durchströmung in umgekehrte Richtung erfolgt, sodass also Luft in den Tank 2 einströmt. Entsprechend kann auch bei geöffnetem Schaltventil 6 kein gasförmiges Fluid aus dem Tank 2 in Richtung der Filtereinrichtung 5 strömen.

Es kann jedoch vorgesehen sein, das Schaltventil 6 derart mit dem Erregerstrom zu beaufschlagen, dass es in der ersten Betriebsart trotz Übersteigen der Erregerstromschwelle durch den Erregerstrom geschlossen bleibt. Zu diesem Zweck wird die Zeitspanne, über welche das Beaufschlagen des Schaltventils mit dem Erregerstrom erfolgt, derart gewählt, dass das Schaltventil 6 geschlossen bleibt. Dies ist üblicherweise der Fall, wenn der Erregerstrom nur über eine kurze Zeitspanne an dem Schaltventil 6 angelegt wird und auf diese Zeitspanne eine ausreichend lange Zeitspanne ohne Beaufschlagung des Schaltventils 6 mit dem Erregerstrom folgt. Durch das Beaufschlagen des Schaltventils 6 mit dem Erregerstrom heizt es sich auf. Vorzugsweise liegt zwischen dem Schaltventil 6 und den Druckbegrenzungsventilen 9 und 10 jeweils eine Wärmeübertragungsverbindung beziehungsweise Wärmeleitverbindung vor. Beispielsweise liegen das Schaltventil 6 und die Druckbegrenzungsventile 9 und 10 in einem gemeinsamen Ventilgehäuse (nicht dargestellt) vor. Die von dem Schaltventil 6 erzeugte Wärme verhindert über die Wärmeübertragungsverbindungen ein Festsetzen der Druckbegrenzungsventile 9 und 10 durch Vereisen. Entsprechend wird ein zuverlässiges Betreiben der Tankeinrichtung 1 auch bei niedrigen Temperaturen sichergestellt.

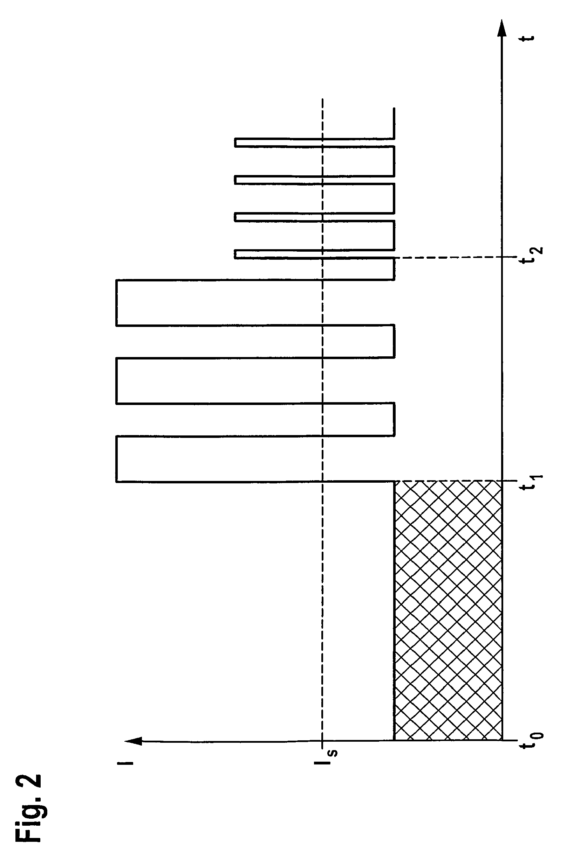

Die Figur 2 zeigt ein Diagramm, in welchem ein Erregerstrom in Form einer Stromstärke I des Schaltventils 6 über der Zeit t aufgetragen ist. Die Erregerstromschwelle I_{S} ist ebenfalls angedeutet. Es wird nun deutlich, dass zwischen t₀ ≤ t < t₁ der Erregerstrom I kleiner als die Erregerstromschwelle I_{S} und dabei einen konstanten Verlauf beziehungsweise einen konstanten Wert aufweist. Zum Zeitpunkt t = t₁ gibt das Steuergerät der Tankeinrichtung 1 ein Entlüften des Tanks 2 vor. Entsprechend wird das Schaltventil 6 mit einem Erregerstrom I beaufschlagt, welcher zumindest zeitweise deutlich größer ist als die Erregerstromschwelle I_{S}. Dies ist bis zum Zeitpunkt t < t₂ der Fall. Für t₁ ≤ t < t₂ ist demnach das Schaltventil 6 geöffnet.

Nachfolgend wird das Schaltventil 6 ebenfalls mit Erregerstrom I beaufschlagt, der die Erregerstromschwelle I_{S} übersteigt. Dies ist ab dem Zeitpunkt t = t₂ der Fall. Die Zeitspanne, während welcher jeweils das Beaufschlagen erfolgt, ist jedoch derart kurz gewählt, dass das Schaltventil 6 geschlossen bleibt. Das zwischen t₀ ≤ t < t₁ durchgeführte Beaufschlagen des Schaltventils 6 mit dem Erregerstrom I wird in der zweiten Betriebsart durchgeführt, das für t ≥ t₂ in der ersten Betriebsart. Alternativ kann in der ersten Betriebsart auch ein konstanter Wert des Erregerstroms I über der Zeit gewählt werden, sodass auch wenn das Entlüften des Tanks 2 von dem Steuergerät nicht vorgegeben wird, ein Öffnen des Schaltventils 6 in Kauf genommen wird, um das Aufheizen des Schaltventils 6 und zusätzlich der Druckbegrenzungsventile 9 und 10 vornehmen zu können.

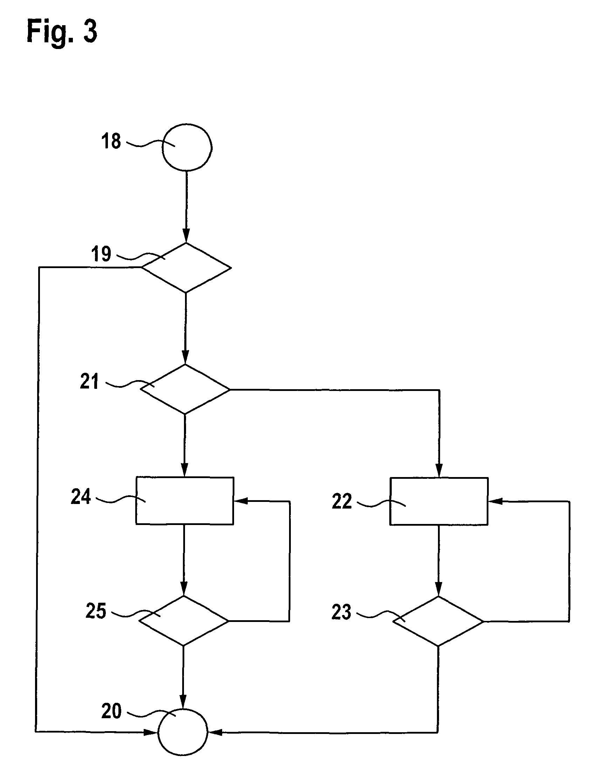

Die Figur 3 zeigt ein Ablaufdiagramm eines Verfahrens zum Betreiben der Tankeinrichtung 1. Die Durchführung des Verfahrens beginnt an einem Startpunkt 18. In einer auf diesen folgenden Verzweigung 19 wird geprüft, ob eine Umgebungstemperatur kleiner ist als eine Vereisungstemperatur, bei welcher in den Druckbegrenzungsventilen 9 und 10 und dem Schaltventil 6 vorliegende Feuchtigkeit gefrieren könnte. Ist dies nicht der Fall, so wird zu einem Endpunkt 20 des Verfahrens verzweigt. Ist dagegen die Temperatur kleiner oder gleich der Vereisungstemperatur, so wird das Verfahren an einer Verzweigung 21 fortgeführt. In dieser wird geprüft, ob eine erste oder eine zweite Betriebsart durchgeführt werden soll. Zu diesem Zweck wird vorzugsweise geprüft, ob die Umgebungstemperatur kleiner ist als die Umgebungsschwellentemperatur, die Tanktemperatur des Tanks kleiner ist als die Fluidschwellentemperatur und/oder ob der Tankinnendruck kleiner ist als der Schwellentankinnendruck. Trifft zumindest eine der genannten Bedingungen zu, so wird die erste Betriebsart durchgeführt, ansonsten die zweite.

Zur Durchführung der ersten Betriebsart wird zu einer Aktion 22 verzweigt, in welcher das Schaltventil 6 zum Aufheizen mit Erregerstrom I beaufschlagt wird, der größer ist als die Erregerstromschwelle I_{S}. Der Erregerstrom I kann dabei in Abhängigkeit von einer Sollheizleistung gewählt werden, welche wiederum insbesondere von der Umgebungstemperatur und/oder einer Kapazität des Tanks 2 abhängt. Nach dem Beaufschlagen des Schaltventils 6 mit dem Erregerstrom I in der ersten Betriebsart, beispielsweise über einen bestimmten Zeitraum, wird in einer Verzweigung 23 geprüft, ob die Umgebungstemperatur größer ist als die Vereisungstemperatur und/oder ob zumindest eine Temperatur der Ventileinrichtung 4 größer ist als diese. Ist dies nicht der Fall, so wird zurück zu der Aktion 22 verzweigt. Ansonsten wird das Verfahren an dem Endpunkt 20 beendet.

Soll dagegen die zweite Betriebsart durchgeführt werden, so wird aus der Verzweigung 21 eine Aktion 24 angesprochen. Während dieser wird das Schaltventil 6 mit Erregerstrom I beaufschlagt, der kleiner ist als die Erregerstromschwelle I_{S}. Anschließend wird in einer Verzweigung 25 analog zu der Verzweigung 23 überprüft, ob die Umgebungstemperatur und/oder die Temperatur der Ventileinrichtung 4 größer ist als die Gefriertemperatur. Ist dies nicht der Fall, so wird die Aktion 24 erneut durchgeführt. Andernfalls wird das Verfahren an dem Endpunkt 20 beendet.

### BEZUGSZEICHENLISTE

- 1: Tankeinrichtung
- 2: Tank
- 3: Tankentlüftungseinrichtung
- 4: Ventileinrichtung
- 5: Filtereinrichtung
- 6: Schaltventil
- 7: Querschnittsverstellglied
- 8: Aktuator
- 9: Druckbegrenzungsventil
- 10: Druckbegrenzungsventil
- 11: Entlüftungsverbindung
- 12: Auslaufsicherung
- 13: Tankinnenraum
- 14: Spülluftverbindung
- 15: Fördereinrichtung
- 16: Verbindung
- 17: Schaltventil
- 18: Startpunkt
- 19: Verzweigung
- 20: Endpunkt
- 21: Verzweigung
- 22: Aktion
- 23: Verzweigung
- 24: Aktion
- 25: Verzweigung

## Patentansprüche

1. Verfahren zum Betreiben einer Tankeinrichtung (1) eines Kraftfahrzeugs, wobei die Tankeinrichtung (1) einen Tank (2) sowie eine Tankentlüftungseinrichtung (3) mit wenigstens einem mit einem Erregerstrom beaufschlagbaren Schaltventil (6) aufweist und das Schaltventil (6) nur öffnet, wenn der Erregerstrom eine Erregerstromschwelle über eine bestimmte Zeitspanne hinweg übersteigt, **dadurch gekennzeichnet, dass** das Schaltventil (6) zum Aufheizen in einer ersten Betriebsart zumindest zeitweise auch dann mit Erregerstrom beaufschlagt wird, der größer ist als die Erregerstromschwelle, wenn ein Entlüften des Tanks (2) von einem Steuergerät der Tankeinrichtung (1) nicht vorgegeben wird.

2. Verfahren nach Anspruch 1, **dadurch gekennzeichnet, dass** die erste Betriebsart durchgeführt wird, wenn eine Umgebungstemperatur kleiner ist als eine Umgebungsschwellentemperatur und/oder eine Tanktemperatur des Tanks (2), insbesondere eine Fluidtemperatur von in dem Tank (2) befindlichen Fluid, kleiner ist als eine Fluidschwellentemperatur und/oder ein Tankinnendruck kleiner ist als ein Schwellentankinnendruck.

3. Verfahren nach einem der vorhergehenden Ansprüche, **dadurch gekennzeichnet, dass** das Beaufschlagen des Schaltventils (6) mit dem Erregerstrom in der ersten Betriebsart über eine Zeitspanne durchgeführt wird, die derart gewählt ist, dass das Schaltventil (6) geschlossen bleibt.

4. Verfahren nach einem der vorhergehenden Ansprüche, **dadurch gekennzeichnet, dass** das Schaltventil zum Aufheizen in einer zweiten Betriebsart zumindest zeitweise mit Erregerstrom beaufschlagt wird, der kleiner ist als die Erregerstromschwelle.

5. Verfahren nach einem der vorhergehenden Ansprüche, **dadurch gekennzeichnet, dass** die zweite Betriebsart durchgeführt wird, wenn die Umgebungstemperatur größer ist als die Umgebungsschwellentemperatur und/oder die Tanktemperatur des Tanks (2), insbesondere die Fluidtemperatur des in dem Tank (2) befindlichen Fluids, größer ist als die Fluidschwellentemperatur und/oder der Tankinnendruck größer ist als der Schwellentankinnendruck.

6. Verfahren nach einem der vorhergehenden Ansprüche, **dadurch gekennzeichnet, dass** durch das Aufheizen des Schaltventils (6) wenigstens ein mit dem Schaltventil (6) in Wärmeübertragungsverbindung stehendes und zu diesem parallel geschaltetes Druckbegrenzungsventil (9,10) erwärmt wird.

7. Verfahren nach einem der vorhergehenden Ansprüche, **dadurch gekennzeichnet, dass** das Beaufschlagen des Schaltventils (6) mit Erregerstrom periodisch oder kontinuierlich durchgeführt wird.

8. Verfahren nach Anspruch 7, **dadurch gekennzeichnet, dass** das periodische Beaufschlagen mittels Pulsweitenmodulation durchgeführt wird.

9. Verfahren nach einem der vorhergehenden Ansprüche, **dadurch gekennzeichnet, dass** der Erregerstrom in Abhängigkeit von einer Sollheizleistung gewählt wird.

10. Tankeinrichtung (1) eines Kraftfahrzeugs, insbesondere zur Durchführung des Verfahrens nach einem oder mehreren der vorhergehenden Ansprüche, die einen Tank (2) sowie eine Tankentlüftungseinrichtung (3) mit wenigstens einem mit einem Erregerstrom beaufschlagbaren Schaltventil (6) aufweist und das Schaltventil (6) nur öffnet, wenn der Erregerstrom über eine bestimmte Zeitspanne hinweg eine Erregerstromschwelle übersteigt, **dadurch gekennzeichnet, dass** ein Steuergerät der Tankeinrichtung (1) dazu ausgebildet ist, das Schaltventil (6) zum Aufheizen in einer ersten Betriebsart zumindest zeitweise auch dann mit Erregerstrom zu beaufschlagen, der größer ist als die Erregerstromschwelle, wenn ein Entlüften des Tanks (2) von dem Steuergerät nicht vorgegeben ist.

## Claims

1. Method for operating a tank device (1) of a motor vehicle, wherein the tank device (1) has a tank (2) and a tank ventilating device (3) comprising at least one control valve (6) to which an excitation current can be applied, and the control valve (6) opens only when the excitation current exceeds an excitation current threshold over a specified period of time, **characterised in that** an excitation current which is greater than the excitation current threshold is also, at least temporarily, applied to the control valve (6) for heating purposes in a first operating mode when ventilation of the tank (2) is not specified by a controller of the tank device (1).

2. Method according to claim 1, **characterised in that** the first operating mode is performed when an ambient temperature is less than an ambient threshold temperature and/or a tank temperature of the tank (2), in particular a fluid temperature of fluid in the tank (2), is less than a fluid threshold temperature and/or the internal tank pressure is less than a threshold internal tank pressure.

3. Method according to one of the preceding claims, **characterised in that** the excitation current is applied to the control valve (6) in the first operating mode over a period of time that is selected so that the control valve (6) remains closed.

4. Method according to one of the preceding claims, **characterised in that** the excitation current applied at least temporarily to the control valve for heating purposes in a second operating mode, is less than the excitation current threshold.

5. Method according to one of the preceding claims, **characterised in that** the second operating mode is performed if the ambient temperature is greater than the ambient threshold temperature and/or the tank temperature of the tank (2), in particular the fluid temperature of fluid in the tank (2), is greater than the fluid threshold temperature and/or the internal tank pressure is greater than the threshold internal tank pressure.

6. Method according to one of the preceding claims, **characterised in that** through heating of the control valve (6) at least one pressure relief valve (9,10) which is in heat transfer contact with, and connected in parallel to, the control valve (6), is heated.

7. Method according to one of the preceding claims, **characterised in that** the excitation current is periodically or continuously applied to the control valve (6).

8. Method according to claim 7, **characterised in that** the periodic application is performed by means of pulse width modulation.

9. Method according to one of the preceding claims, **characterised in that** the excitation current is selected as a function of a setpoint heating power.

10. Tank device (1) of a motor vehicle, in particular for carrying out the methods according to one or more of the preceding claims, which comprises a tank (2) and a tank ventilating device (3) comprising at least one control valve (6) to which an excitation current can be applied, and the control valve (6) opens only when over a specified period of time the excitation current exceeds an excitation current threshold, **characterised in that** a controller of the tank device (1) is configured to at least temporarily apply an excitation current that is greater than the excitation current threshold to the control valve (6) for heating purposes in a first operating mode when ventilation of the tank (2) is not specified by the controller.

## Revendications

1. Procédé pour faire fonctionner un dispositif de réservoir (1) d'un véhicule automobile, le dispositif de réservoir (1) comportant un réservoir (2) ainsi qu'un dispositif de dégazage de réservoir (3) avec au moins une vanne de commande (6) qui peut être alimentée avec un courant d'excitation et la vanne de commande (6) n'ouvrant que si le courant d'excitation dépasse un seuil de courant d'excitation pendant un certain laps de temps, **caractérisé en ce que**, pour préchauffer dans un premier mode de fonctionnement, la vanne de commande (6) est alimentée au moins temporairement avec un courant d'excitation qui est supérieur au seuil de courant d'excitation même si un dégazage du réservoir (2) n'est pas prescrit par un appareil de commande du dispositif de réservoir (1).

2. Procédé selon la revendication 1, **caractérisé en ce que** le premier mode de fonctionnement est mis en oeuvre si une température ambiante est inférieure à une température de seuil ambiante et/ou si une température de réservoir du réservoir (2), notamment une température de fluide du fluide présent dans le réservoir (2), est inférieure à une température de seuil de fluide et/ou si une pression interne de réservoir est inférieure à une pression interne de seuil de réservoir.

3. Procédé selon l'une des revendications précédentes, **caractérisé en ce que** l'alimentation de la vanne de commande (6) avec le courant d'excitation dans le premier mode de fonctionnement s'effectue pendant un laps de temps qui est choisi de telle sorte que la vanne de commande (6) reste fermée.

4. Procédé selon l'une des revendications précédentes, **caractérisé en ce que**, pour préchauffer dans un deuxième mode de fonctionnement, la vanne de commande est alimentée au moins temporairement avec un courant d'excitation qui est inférieur au seuil de courant d'excitation.

5. Procédé selon l'une des revendications précédentes, **caractérisé en ce que** le deuxième mode de fonctionnement est mis en oeuvre si la température ambiante est supérieure à la température de seuil ambiante et/ou si la température de réservoir du réservoir (2), notamment la température de fluide du fluide présent dans le réservoir (2), est supérieure à la température de seuil de fluide et/ou si la pression interne de réservoir est supérieure à la pression interne de seuil de réservoir.

6. Procédé selon l'une des revendications précédentes, **caractérisé en ce que**, par le préchauffage de la vanne de commande (6), au moins une vanne de limitation de pression (9, 10) qui est en liaison de transfert thermique avec la vanne de commande (6) et qui est branchée en parallèle avec celle-ci est chauffée.

7. Procédé selon l'une des revendications précédentes, **caractérisé en ce que** l'alimentation de la vanne de commande (6) avec un courant d'excitation s'effectue de manière périodique ou continue.

8. Procédé selon la revendication 7, **caractérisé en ce que** l'alimentation périodique s'effectue au moyen d'une modulation de largeur d'impulsion.

9. Procédé selon l'une des revendications précédentes, **caractérisé en ce que** le courant d'excitation est choisi en fonction d'une puissance de chauffage de consigne.

10. Dispositif de réservoir (1) d'un véhicule automobile, notamment pour la mise en oeuvre du procédé selon l'une ou plusieurs des revendications précédentes, le dispositif de réservoir comportant un réservoir (2) ainsi qu'un dispositif de dégazage de réservoir (3) avec au moins une vanne de commande (6) qui peut être alimentée avec un courant d'excitation et la vanne de commande (6) n'ouvrant que si le courant d'excitation dépasse un seuil de courant d'excitation pendant un certain laps de temps, **caractérisé en ce qu'**un appareil de commande du dispositif de réservoir (1) est conçu, pour préchauffer dans un premier mode de fonctionnement, pour alimenter la vanne de commande (6) au moins temporairement avec un courant d'excitation qui est supérieur au seuil de courant d'excitation même si un dégazage du réservoir (2) n'est pas prescrit par l'appareil de commande.
